# EUROPEAN PATENT SPECIFICATION

(11) **EP 2 017 504 B1**
(45) Date of publication and mention of the grant of the patent: **22.08.2012**
(21) Application number: 08252431.5
(22) Date of filing: 18.07.2008
(51) Int. Cl.: F16H 63/18, B60W 30/18

(54) **Gearshift device**
Gangschaltanlage
Boîte de vitesses

(30) Priority: 20.07.2007 JP 2007189232
(43) Date of publication of application: 21.01.2009
(73) Proprietor: Yamaha Hatsudoki Kabushiki Kaisha, Shizuoka-ken Shizuoka 438-8501 (JP)
(72) Inventor: Masuda, Tatsuya, Iwata-shi, Shizuoka-ken 438-8501 (JP)
(74) Representative: Moreland, David

(56) References cited:
- EP-A- 1 138 546
- JP-A- 11 013 881
- JP-A- 56 028 346
- US-A- 6 085 607
- US-A- 6 117 046

## Description

### FIELD OF THE INVENTION

The present invention relates to a gearshift device, an in particular to a gearshift device in which an operation of disconnection of a clutch is performed at the same time as speed change.

### BACKGROUND TO THE INVENTION

JP-A-2003-125028 discloses a conventional gearshift device which serves to operate a transmission of a motorcycle and comprises a shift shaft having a shift pedal operated by an occupant's foot, a clutch release mechanism, which disconnects a clutch upon rotation of the shift shaft by a predetermined release angle, and a gearshift mechanism provided between the shift shaft and an input member of the transmission.

The clutch release mechanism comprises a cam, which converts rotation of the shift shaft into axial movements, and is constructed that the cam pushes a release push rod of the clutch. The clutch serves to transmit rotation of a crank shaft of an engine to a transmission and to cut off power transmission to the transmission from the crank shaft and is constructed to shift to a disconnected state when the push rod is pushed and to be connected upon returning of the push rod.

The gearshift mechanism comprises a first shift lever mounted to the shift shaft to rotate integrally with the shift shaft, a second shift lever connected to the first shift lever to be able to turn relatively, and an engaging member provided pivotally at an end of the second shift lever close to the input member.

A plurality of pins are provided upright on the input member to be positioned correspondingly to speed change positions and made parallel to an axial direction of the input member. The second shift lever swings whereby the engaging member engages with the pins to rotate the input member in a direction of speed change.

A connection for connection of the first shift lever and the second shift lever is constructed so that the first shift lever floats (turns singly) a distance corresponding to the release angle. The connection adopts a construction, in which a pin of the first shift lever is caused to engage with a hole formed on the second shift lever. The hole is formed to have a size, which enables the pin to move relative to the hole by a distance corresponding to the release angle.

With the conventional gearshift device constructed in this manner, an occupant manipulates a shift pedal to cause the shift shaft to turn in one or the other direction whereby the clutch release mechanism pushes a push rod of the clutch and the first shift lever rotates integrally with the shift shaft. The first shift lever floats (idles) relative to the second shift lever for a period from the start of speed change operation to time, during which a disconnected operation of the clutch by the clutch release mechanism is completed. When the shift shaft turns further to disconnect the clutch, an operating force is transmitted to the second shift lever from the first shift lever, the second shift lever turns, and with such turning, the engaging member rotates the input member of the transmission in the direction of speed change.

The conventional gearshift device described above uses two shift levers (the first shift lever and the second shift lever) in order to transmit rotation of the shift shaft to the input member of the transmission, thus causing a problem that the device becomes large in size and parts are increased in number to lead to- an increase in manufacturing cost.

The invention has been thought of in order to dissolve such a problem and has its object to provide a gearshift device capable of achieving miniaturization and reduction in number of parts to achieve reduction in cost while adapting a construction, in which speed change is made after a clutch is disconnected by a speed change operation.

The closest prior art document, US 6 085 607 describes a transmission device for performing simple and precise gear changes without using a change pedal and a change lever. By operating a shift up or shift down switch, a motor rotates a shift spindle, a transmission clutch and a shift drum. An L-shaped connecting arm is attached to the shift spindle and extends inside an opening of a change arm so that when the shift spindle revolves, the tip of the connecting arm slips a predetermined distance inside the opening of the change arm before the tip engages with the internal edge of the opening and causes the change arm to rotate. When the tip is slipping, the change arm remains stopped in a neutral position, and during that time, the transmission clutch is released.

EP 1 138 546 describes a transmission having a shift spindle. When the shift spindle is pivoted, lift of a clutch is started by a clutch arm. When pivoting the spindle, a sub arm is also pivoted and a pre-load is applied to a master arm by a preload spring. After the pre-load is applied, further pivoting of the sub arm causes the master arm to follow the sub arm and pivot a shift drum via index pins.

### SUMMARY OF THE INVENTION

According to a first aspect of the present invention there is provided a gearshift device comprising:
a shift shaft adapted to be rotated by an operation member;
a clutch release mechanism adapted to disconnect a clutch upon rotation of the shift shaft by a predetermined release angle;
a transmission input member; and
an engaging member adapted to move upon rotation of the shift shaft between an initial position spaced a distance corresponding to the release angle from the input member, and a speed change position in which the engaging member engages the input member to displace said input member to effect a transmission gear shift.

Accordingly, this arrangement therefore permits the shift shaft to rotate by the release angle to disengage the clutch, prior to, or at least simultaneously with, engagement of the engaging member with the input member. Following such engagement a gear shift may be achieved. Thus, the clutch may advantageously be disengaged during the same procedure to effect a gear shift.

The transmission gear shift may also be referred to as a speed change, gear change or the like.

The engaging member may be adapted to engage with the input member to rotate said member to effect a transmission gear shift.

The gearshift device may further comprise a shift lever disposed between the shift shaft and the input member and configured to float upon rotation of the shift shaft by a distance corresponding to the release angle.

The shift lever may comprise a shift lever body provided on the shift shaft so as to rotate integrally with the shift shaft.

The engaging member may be mounted on the shift lever.

The shift lever body may be formed to extend on an opposite side of a center of rotation of the input member to the shift shaft. The engaging member may be provided in a position, in which it engages with the input member from an opposite side to the shift shaft.

A plurality of pins may be provided upright on the input member to be disposed in positions corresponding to gear shift positions and made parallel to an axial direction of the input member. The engaging member may include a pawl adapted to engage with at least one pin in a direction perpendicular to the axial direction.

The shift lever body may be provided with a stopper adapted to abut against the pin to restrict rotation of the input member in a state, in which the engaging member is rotated so as to be positioned in a speed change position.

Concave and convex surfaces may be formed on an outer periphery of the input member to correspond to gear shift positions.

The gearshift device may further comprise:
a roller in contact with the outer periphery of the input member;
a positioning lever supporting the roller rotatably and supported rotatably on the shift shaft; and
a spring member, which biases the positioning lever so that the roller is pushed against the input member.

The positioning lever and a part of the spring member may be positioned in a manner to overlap the shift lever body as viewed in an axial direction of the shift shaft.

The operation member may comprise a manually operated member.

The operation member may comprise an actuator having a power source.

A gearshift device according to another aspect of the invention comprises a shift shaft rotated by an operation member in one or the other direction, a clutch release mechanism, which disconnects a clutch upon rotation of the shift shaft by a predetermined release angle, and a shift lever provided between the shift shaft and an input member of a transmission so as to float by a distance corresponding to the release angle and caused by rotation of the shift shaft over the release angle to engage with the input member to rotate the input member, and the shift lever comprises a shift lever body provided on the shift shaft so as to rotate integrally with the shift shaft, and an engaging member provided rotatably at an end of the shift lever body close to the input member to move, upon rotation of the shift shaft in one or the other direction, between an initial position spaced a distance corresponding to the release angle from the input member and a speed change position, in which the engaging member engages with the input member to rotate the same until speed change of the input member is completed.

According to the invention, a speed change operation causes the shift shaft to rotate by the release angle whereby the clutch is disconnected. At this time, the engaging member does not engage with the input member but the engaging member and the shift lever body rotate integrally with the shift shaft.

The shift shaft rotates over the release angle whereby the engaging member engaged with the input member to push the input member in a direction of speed change, so that speed change is performed.

Therefore, according to the invention, the shift lever body and the engaging member enable transmitting of rotation of the shift shaft to the input member of the transmission, so that it is possible to decrease lever members in number as compared with conventional gearshift devices.

Accordingly, it is possible to provide a gearshift device capable of achieving miniaturization and reduction in number of parts to achieve reduction in cost while adopting a construction, in which speed change is made after a clutch is disconnected by a speed change operation.

The shift lever body may be formed to extend on an opposite side of a center of rotation of the input member to the shift shaft, and the engaging member is provided in a position, in which it engages with the input member from an opposite side to the shift shaft.

The input member can be provided in a position close to the shift shaft, so that it is possible to provide a further compact gearshift device.

A plurality of pins may be provided upright in positions corresponding to speed change positions on the input member to be made parallel to an axial direction of the input member. The engaging member may be provided with a pawl, which engages with the pin in a direction perpendicular to the axial direction, and the shift lever body is provided with a stopper, which abuts against the pin to restrict rotation of the input member in a state, in which the engaging member is rotated so as to be positioned in a speed change position.

With this arrangement, the stopper can prevent the input member from rotating excessively due to inertia, so that it is possible to provide a gearshift device, in which speed change is exactly performed at all times.

Concave and convex surfaces may be formed on an outer periphery of the input member to correspond to speed change positions.

The gearshift device may further comprise a roller in contact with the outer periphery of the input member, a positioning lever supporting the roller rotatably and supported rotatably on the shift shaft, and a spring member, which biases the positioning lever so that the roller is pushed against the input member, and the positioning lever and a part of the spring member are positioned in a manner to overlap the shift lever body as viewed in an axial direction of the shift shaft.

With this arrangement, the positioning lever serving to hold the input member in a predetermined position can be mounted so as not to project much outside the shift lever body as viewed in an axial direction of the shift shaft. Therefore, it is possible to provide a gearshift device capable of preventing the input member from rotating unnecessarily while achieving miniaturization.

The operation member may comprise a member being operated manually or artificially.

With this arrangement, it is possible to provide a gearshift device, in which an operator's foot operates to enable switchover in connection·disconnection of the clutch and speed change with the transmission.

The operation member may comprise an actuator having a power source.

With this arrangement, it is possible to provide a gearshift device enabling switchover in connection and disconnection of the clutch and speed change with the transmission in a remote control operation.

Other aspects of the present invention relate to a vehicle, such as a motorcycle, which comprises a gearshift device according to any other aspect defined herein.

### BRIEF DESCRIPTION OF THE DRAWINGS

These and other aspects of the present invention will now be described, by way of example only, with reference to the accompanying drawings, in which:
Fig. 1 is a cross sectional view showing a gearshift device according to an embodiment of the invention;
Fig. 2 is a cross sectional view showing a clutch and a part of a transmission;
Fig. 3 is a side view showing a part of the device of the present embodiment;
Fig. 4 is a side view showing a part of the device of the present embodiment;
Fig. 5 is a side view showing a cam mechanism of a clutch release mechanism;
Fig. 6 is a perspective view showing an outline construction of a shift lever body, an engaging member, and an input member; and
Fig. 7 is a side view showing a spacing between a pawl of the engaging member and a pin of the input member.

### DETAILED DESCRIPTION OF THE DRAWINGS

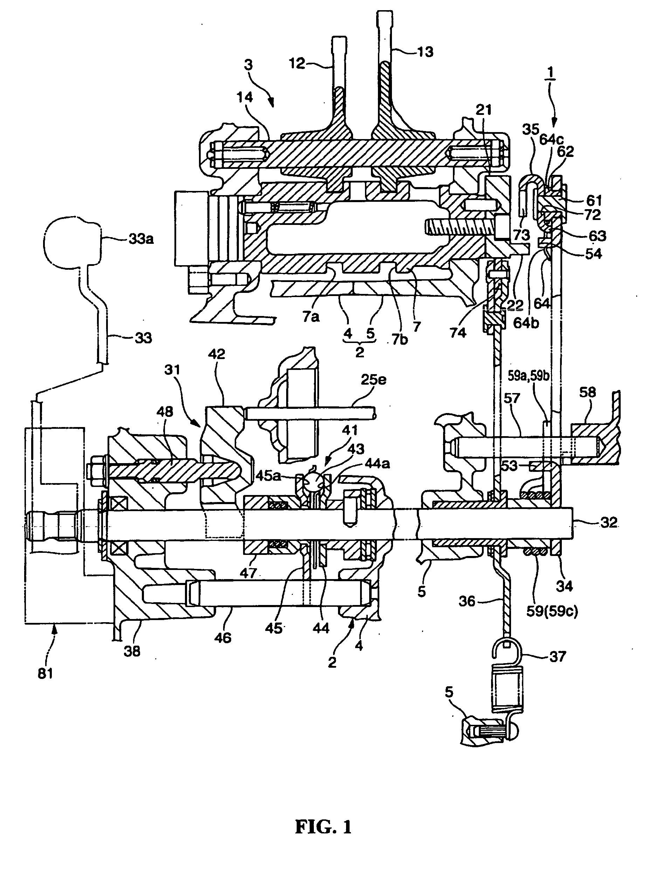

A gearshift device according to the invention will be described in detail below with reference to Figs. 1 to 7.

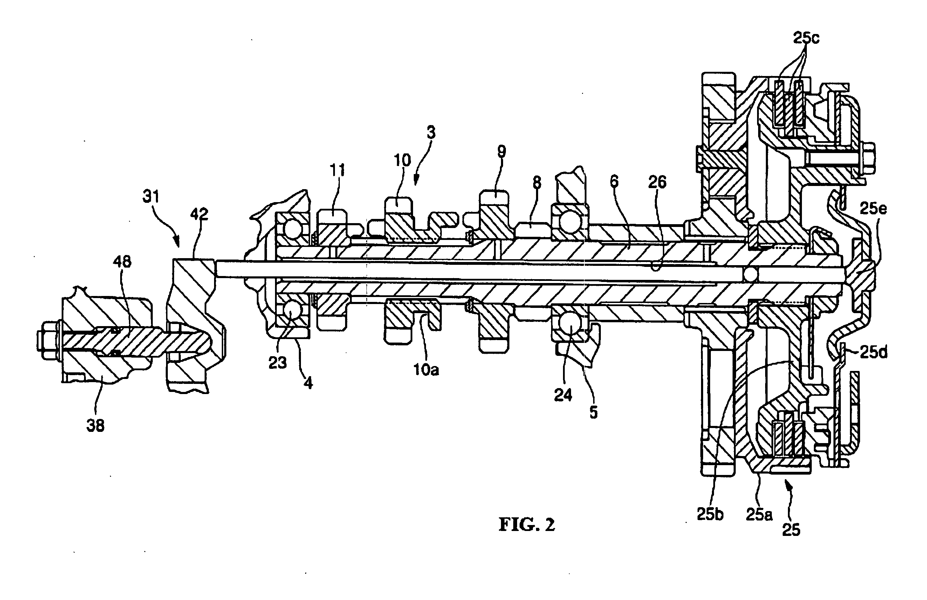

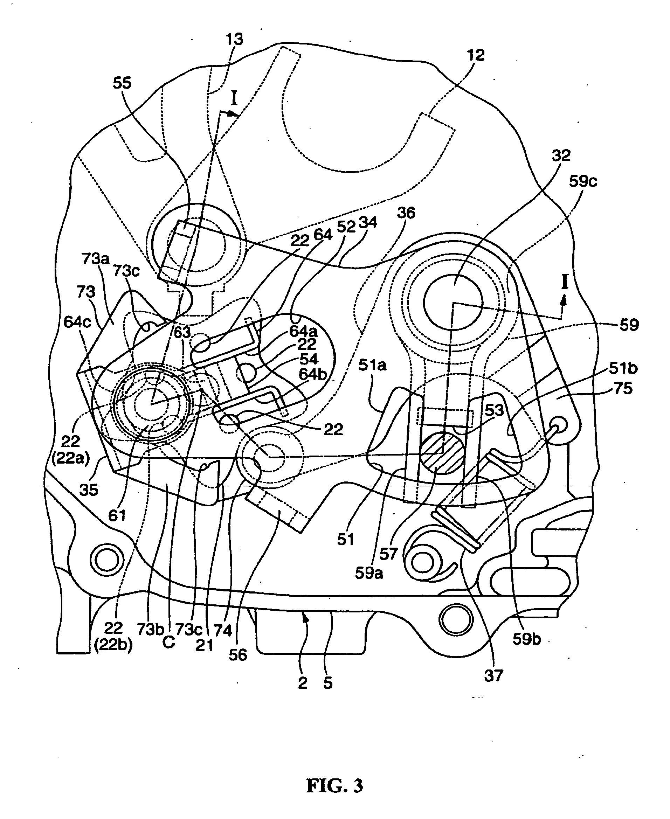

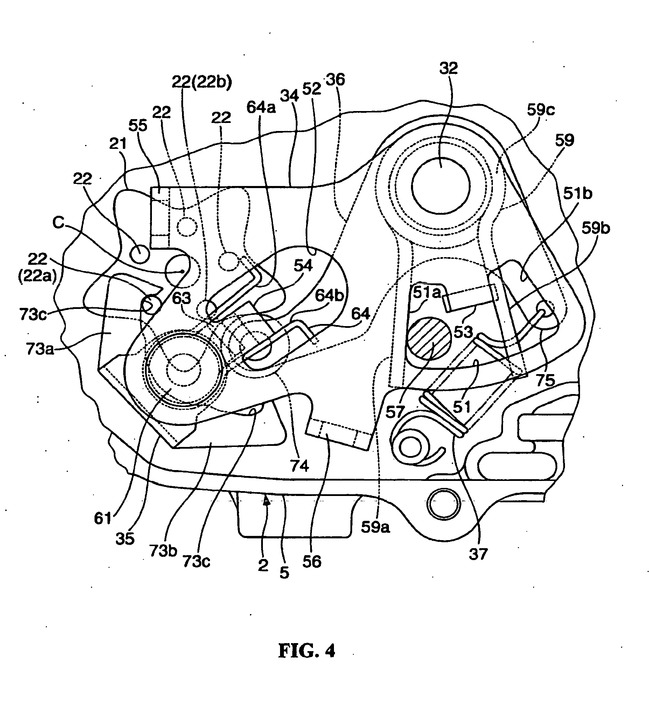

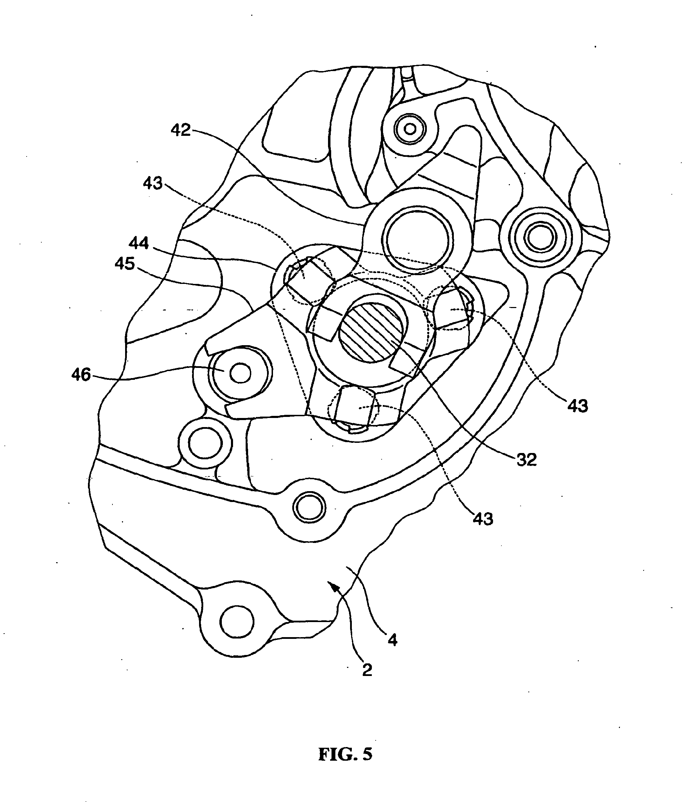

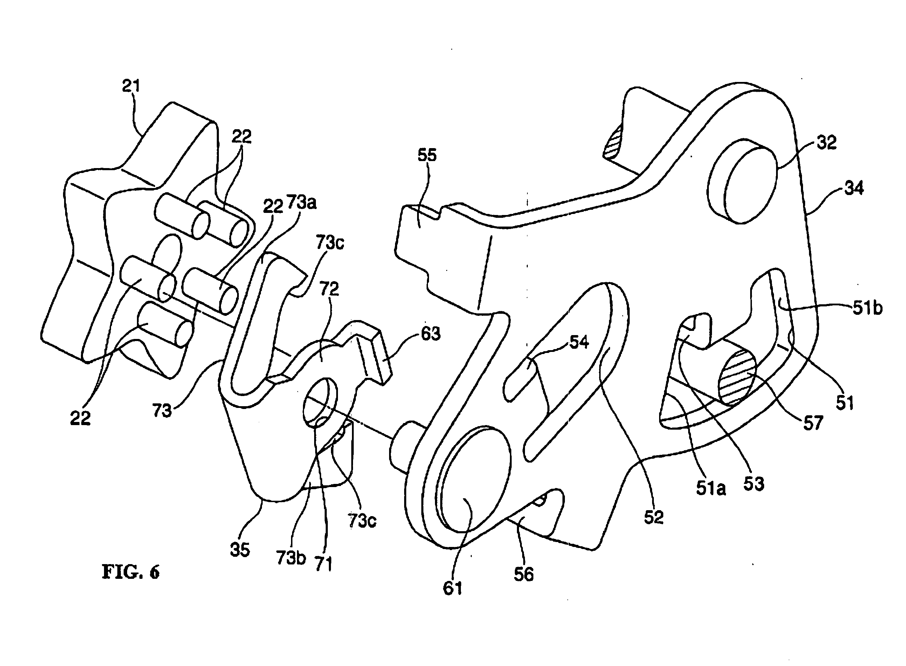

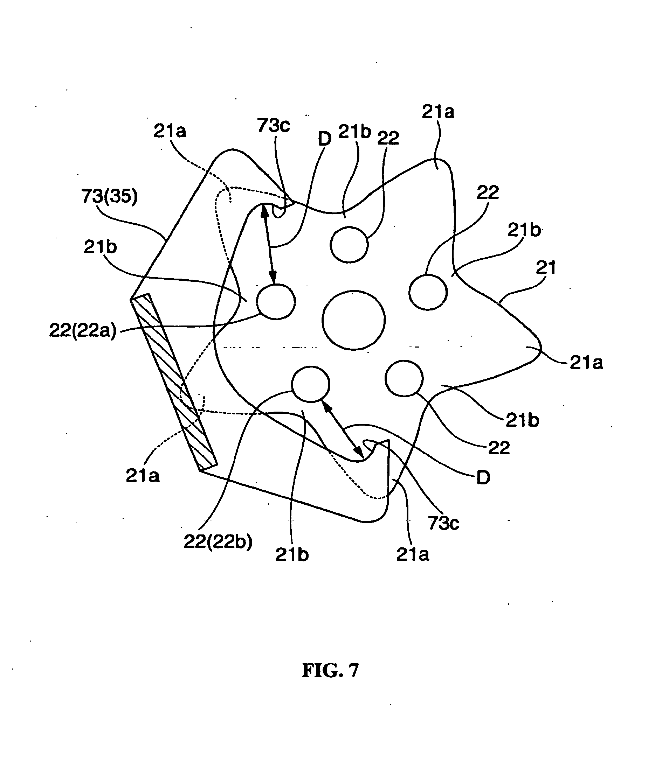

Fig. 1 is a cross sectional view showing the gearshift device according to the invention, Fig. 2 is a cross sectional view showing a clutch and a part of a transmission, Figs. 3 and 4 are side views showing an essential part, Fig. 3 showing a state before gearshift, and Fig. 4 showing a state after gearshift. In Fig. 3, a broken position in Fig. 1 is indicated by the line I-I. Fig. 5 is a side view showing cams of a clutch release mechanism and Fig. 6 is a perspective view showing an outline construction of a shift lever body, an engaging member, and an input member. Fig. 7 is a side view showing a spacing between a pawl of the engaging member and a pin of the input member.

In these drawings, the reference numeral 1 denotes a gearshift device according to the embodiment. The gearshift device 1 is mounted on a crank case 2 of an engine for motorcycles to operate a transmission 3 provided in the crank case 2.

As shown in Fig. 1, the crank case 2 comprises a vehicle-body left half (referred below to as left crank-case half 4) and a vehicle-body right half (referred below to as right crank-case half 5) and rotatably supports a crank shaft (not shown) of the engine, a main shaft 6 (see Fig. 2) of the transmission 3 described later, a drive shaft (not shown), a shift drum 7 (see Fig. 1) or the like, respectively.

The transmission 3 is of a structure, which is conventionally well known, and comprises, as shown in Figs. 1 and 2, a main shaft 6 positioned rearwardly of a crank shaft (not shown), a drive shaft (not shown) for driving of a rear wheel, positioned rearwardly upwardly of the main shaft 6, four gears 8 to 11 provided on the main shaft 6, four gears (not shown) provided on the drive shaft, the shift drum 7, first and second shift forks 12, 13, which engage with speed change cams 7a, 7b of the shift drum 7, etc.

As shown in Fig. 1, the first and second shift forks 12, 13 are supported movably on a spindle 14. The first shift fork 12 engages with an annular groove 10a (see Fig. 2) of an axially movable gear 10 out of the four gears 8 to 11 provided on the main shaft 6. The second shift fork 13 engages with an annular groove of an axially movable gear (not shown) out of the four gears provided on the drive shaft.

The shift drum 7 is rotated in one direction or the other direction by the gearshift device 1 described later whereby the transmission 3 is changed in speed. That is, when the gearshift device 1 rotates the shift drum 7 in one direction or the other direction, the first and second shift forks 12, 13 are moved correspondingly in an axial direction of the shift drum 7 and the gears engaging with the shift forks 12, 13 are moved in the axial direction.

The gears are thus moved in the axial direction whereby a gear for transmission of power from the main shaft 6 to the drive shaft is switched to change the transmission 3 in speed. Rotation of the drive shaft is transmitted to the rear wheel through a chain (not shown).

As shown in Fig. 1, a segment 21 referred to as an input member in the invention is fixed to an end of the shift drum 7 toward the right of a vehicle body to rotate together therewith. As shown in Figs. 3, 4, 6, and 7, the segment 21 is formed to be star-shaped as viewed in an axial direction. Specifically, five projections 21a and five recesses 21b (see Fig. 7), which correspond to speed change positions, are formed on an outer periphery of the segment 21.

Outer peripheral surfaces of the projections 21a and the recesses 21b are defined by respective convex and concave surfaces. The convex and concave surfaces constitute irregular surfaces referred to in the invention. Also, pins 22 are provided upright centrally of the segment 21 relative to the respective recesses 21b on the segment 21. The pins 22 project toward the right of a vehicle body from the segment 21 and in parallel to the axial direction of the segment 21.

As shown in Fig. 2, the main shaft 6 is supported rotatably on the crank case 2 by bearings 23, 24. The main shaft 6 is formed to extend through the right crank-case half 5 to project rightwardly of a vehicle body. A speed change clutch 25 is provided on an end of the main shaft 6 toward the right of a vehicle body.

The speed change clutch 25 comprises a clutch housing 25a gear-coupled to a centrifugal clutch (not shown) on a side of the crank shaft, a clutch boss 25b positioned within the clutch housing 25a, a plurality of friction plates 25c provided between the clutch housing 25a and the clutch boss 25b, a disc spring 25d, which biases the friction plates 25c in an axial direction, a push rod 25e, which pushes a center of the disc spring 25d, etc.

The push rod 25e is moved to the right side of the vehicle body by the gearshift device 11 described later immediately before speed change. The push rod 25e is moved toward the right of a vehicle body against the elastic force of the disc spring 25d whereby the speed change clutch 25 is shifted to a disconnected state from a connected state. Also, when a force, with which the gearshift device 11 pushes the push rod 25e, disappears, the speed change clutch 25 is shifted to the connected state from the disconnected state by the elastic force of the disc spring 25d.

The clutch housing 25a is supported rotatably on the main shaft 6. The clutch boss 25b is spline-fitted onto the main shaft 6 to be supported on the main shaft 6 in a state of being axially movable and inhibited from rotating relative to the main shaft 6. Therefore, in the case where the speed change clutch 25 is put in the connected state, rotation of the centrifugal clutch (the crank shaft) is transmitted to the main shaft 6, and in the case where the speed change clutch 25 is put in the disconnected state, transmission of rotation to the main shaft 6 is cut off.

As shown in Fig. 2, the push rod 25e is inserted through a through-hole 26 formed in an axial center portion of the main shaft 6 to extend through the left crank-case half 4 to project leftwardly of a vehicle body. An end of the push rod 25e toward the left of a vehicle body connects to a clutch release mechanism 31 of the gearshift device 1 described later.

As shown in Fig. 1, the gearshift device 1 comprises a shift shaft 32 extending through the crank case 2 in a vehicle width direction (left and right direction in Fig. 1), a shift pedal 33 provided at an end of the shift shaft 32 toward the left of a vehicle body, a clutch release mechanism 31 provided on the shift shaft 32 toward the left of a vehicle body relative to the left crank-case half 4, a shift lever body 34 fixed to an end of the shift shaft 32 toward the right of a vehicle body, an engaging member 35 mounted rotatably to a swinging end of the shift lever body 34, a positioning lever 36 supported pivotally on the shift shaft 32, a tension coil spring 37, which biases the positioning lever 36 in one direction, etc.

In the embodiment, the shift pedal 33 constitutes an operation member referred to in the invention and the shift lever body 34 and the engaging member 35 constitute a shift lever referred to in the invention.

As shown in Fig. 1, the shift shaft 32 is supported rotatably on the left crank-case half 4 and the right crank-case half 5. The end of the shift shaft 32 toward the left of a vehicle body in the embodiment extends through a flywheel magneto cover 38 mounted to an outer end of the left crank-case half 4 to project toward the left of a vehicle body. Also, as shown in Figs. 3 and 4, the shift shaft 32 is positioned toward the front (on the right in Figs. 3 and 4) of a vehicle body relative to the segment 21 (shift drum 7) as viewed in an axial direction.

The shift pedal 33 is operated by an occupant's foot at the time of speed change and comprises a front pressure receiving portion 33a depressed by a toe region of an operator's foot, and a rear pressure receiving portion (not shown) depressed by a heel.

The clutch release mechanism 31 serves to transmit an operation force at the time of speed change to the push rod 25e of the clutch 25 and comprises, as shown in Fig. 1, a cam mechanism 41, which converts rotation of the shift shaft 32 into axial movements, and an interlocking lever 42 provided between the cam mechanism 41 and the push rod 25e.

The cam mechanism 41 comprises a pair of cam plates 44, 45, which interpose three balls 43 from both sides of the shift shaft 32 in an axial direction. As shown in Fig. 1, recesses 44a, 45a, into which the balls are fitted, are formed in opposite positions on the cam plates 44, 45. The cam plate 44 positioned toward the right of a vehicle body rotates integrally with the shift shaft 32 in a state of being inhibited from moving on the shift shaft 32 in an axial direction. The cam plate 45 positioned toward the left of a vehicle body is supported axially movably on the shift shaft 32 and inhibited from rotating by virtue of engagement with a pin 46 fixed to the crank case 2. The cam plate 45 is connected to one end of the interlocking lever 42 through an driven member 47.

The interlocking lever 42 can swing about a support rod 48 provided upright on the flywheel magneto cover 38 and has one end thereof contacting with the driven member 47 and the other end thereof contacting with the push rod 25e.

The clutch release mechanism 31 according to the embodiment is formed so that the shift shaft 32 rotates a predetermined release angle whereby the driven member 47 pushes one end of the interlocking lever 42 toward the left of a vehicle body and the other end of the interlocking lever 42 pushes the push rod 25e toward the right of a vehicle body to shift the clutch 25 from the connected state to the disconnected state.

As shown in Figs. 3, 4, and 6, the shift lever body 34 is formed into a predetermined shape by subjecting a single sheet metal to blanking and bending. Blanking is performed in order to form an outer edge, first and second holes 51, 52, described later, of the shift lever body 34 and bending is performed in order to raise first to fourth convex pieces 53 to 56, described later, toward the left of a vehicle body.

The shift lever body 34 is formed and welded to the shift shaft 32 to extend from the shift shaft 32 toward the rear of a vehicle body relative to the segment 21 in a state, in which its main surface is directed in a left and right direction of a vehicle body. As shown in Figs. 3 and 4, the shift lever body 34 according to the embodiment is formed to extend on an opposite side of a center C of rotation of the segment 21 to the shift shaft 32.

The first hole 51 is formed on the shift lever body 34 below the shift shaft 32 to restrict a range, in which the shift lever body 34 turns. A pin 57 for restriction of turning is inserted through the first hole 51. The pin 57 extends below the shift shaft 32 in the vehicle width direction and is supported on the right crank-case half 5 and a clutch cover 58 mounted to an outside of the right crank-case half 5 as shown in Fig. 1.

That is, the shift lever body 34 turns (swings) about the shift shaft 32 between a lower turned position (see Fig. 4), in which an opened edge 51a of the first hole 51 toward the rear of a vehicle body contacts with the pin 57, and an upper turned position, in which an opened edge 51b of the first hole 51 toward the front of a vehicle body contacts with the pin 57.

The upper opened edge of the first hole 51 is provided with the first convex piece 53, which faces a longitudinally central region in the first hole 51. The first convex piece 53 is formed to have substantially the same width as a diameter of the pin 57 for restriction of turning and interposed by a pair of straight portions 59a, 59b of a first torsion spring 59 from both sides in a longitudinal direction of a vehicle body.

As shown in Fig. 1, the first torsion spring 59 comprises a coil portion 59c, through which the shift shaft 32 extends rotatably, and the straight portions 59a, 59b, which comprise both ends of the coil portion 59c. The straight portions 59a, 59b are formed to have a length and a spacing, which enable both the first convex piece 53 and the pin 57 for restriction of turning to be interposed. That is, the shift lever body 34 is maintained in a neutral position (position, in which the first convex piece 53 comes closest to the pin 57) shown in Fig. 3 by the elastic force of the first torsion spring 59.

As shown in Figs. 1, 3, and 4, a tip end (swinging end) of the shift lever body 34 mounts rotatably thereto a spindle 61, by which the engaging member 35 described later is supported. As shown in Fig. 1, the spindle 61 is fixed to the engaging member 35 by caulking of a spacer 62 and is supported rotatably on the shift lever body 34 together with the spacer 62.

As shown in Figs. 3 and 4, the second hole 52 is formed between the spindle 61 on the shift lever body 34 and the shift shaft 32. A second convex piece 54 facing the vicinity of a central region of the second hole 52 is provided on an opened edge positioned toward the rear of a vehicle body (toward the swinging end of the shift lever body 34), out of opened edges of the second hole 52.

The second convex piece 54 is formed to have substantially the same width (vertical length) as that of a projection 63 (see Fig. 6) of the engaging member 35 described later. Also, as shown in Fig. 3, the second convex piece 54 is interposed from both vertical sides thereof by a pair of straight portions 64a, 64b of a second torsion spring 64 in a state, in which the engaging member 35 described later is positioned in an initial position. As shown in Fig. 1, the second torsion spring 64 comprises a coil portion 64c, through which the spacer 62 extends rotatably, and the straight portions 64a, 64b comprising both ends of the coil portion 64c.

The straight portions 64a, 64b are formed to have a length and a spacing, which enable both the second convex piece 54 and the projection 63 to be interposed. That is, the engaging member 35 is held in an initial position (position, in which the projection 63 comes closest to the second convex piece 54) shown in Fig. 3 by the elastic force of the second torsion spring 64.

As shown in Figs. 3 and 4, third and fourth convex pieces 55, 56 are provided at upper and lower ends of the shift lever body 34 being intermediate in a longitudinal direction. The third convex piece 55 projects toward the left of a vehicle body from an upper end of the shift lever body 34 and the fourth convex piece 56 projects toward the left of a vehicle body from a lower end of the shift lever body 34. The third and fourth convex pieces 55, 56 are provided in positions so as to be spaced equally from the shift shaft 32. Also, as shown in Fig. 3, the third and fourth convex pieces 55, 56 are positioned to be positioned above or below the segment 21 as viewed from the side (an axial direction of the shift shaft 32) in a state, in which the shift lever body 34 is positioned in a neutral position.

Specifically, as shown in Fig. 4, the third and fourth convex pieces 55, 56 are positioned in positions, in which one of the third and fourth convex pieces 55, 56 is inserted between adjacent pins 22 of the segment 21 in a state (state after speed change), in which the shift lever body 34 is moved to the lower turned position or the upper turned position and the segment 21 is rotated to a speed change position by the engaging member 35 described later. The third and fourth convex pieces 55, 56 constitute a stopper referred to in the invention.

The engaging member 35 is formed into a predetermined shape by punching and bending a sheet metal. As shown in Fig. 6, the engaging member 35 comprises a base portion 72 formed with an axial hole 71, through which the spindle 61 is inserted, the projection 63 protrusively provided at one end of the base portion 72 to be directed toward the right of a vehicle body, and a pawl 73 provided at the other end of the base portion 72.

As shown in Fig. 1, the pawl 73 is formed to extend in parallel to the base portion 72 and toward the left of a vehicle body relative to the base portion 72. A position of the pawl 73 in the vehicle width direction is the same as that of the pin 22 of the segment 21. As shown in Figs. 3 and 4, an upper portion 73a of the pawl 73 extends forwardly upwardly and obliquely from a region, in which it is connected to the base portion 72, and a lower portion 73b extends forwardly downwardly and obliquely from a region, in which it is connected to the base portion 72.

Recesses 73c, on which the pin 22 of the segment 21 is latched, are formed on those tip end portions of the upper portion 73a and the lower portion 73b of the pawl 73, which are opposed to each other. The shift lever body 34 turns about the shift shaft 32 in one or the other direction whereby the engaging member 35 thus formed with the pawl 73 engages with the pin 22a (see Fig. 7), which is positioned closest thereto in a direction, in which the pawl 73 moves, out of the plurality of pins 22 of the segment 21, or the pin 22a, to rotate the segment 21. The engaging member 35 according to the embodiment engages with the pin 22a of the segment 21 from an opposite side to the shift shaft 32.

The recesses 73c of the pawl 73 are formed in positions distant by a spacing D from the pins 22a, 22b of the segment 21 as shown in Fig. 7 in a state, in which the shift lever body 34 is positioned in the neutral position shown in Fig. 3 and the engaging member 35 is held in the initial position. The spacing D corresponds to a distance, over which the engaging member 35 moves together with the shift lever body 34 when the shift shaft 32 rotates by the release angle.

That is, the pawl 73 of the engaging member 35 engages with the pin 22a or the pin 22b after disconnection of the clutch 25 is completed since the start of a speed change operation. In this manner, in a state, in which the pawl 73 engages with the pin 22a, 22b, the shift shaft 32 rotates further and the shift lever body 34 reaches the lower turned position or the upper turned position whereby the engaging member 35 rotates the segment 21 until the completion of speed change and moves to the speed change position shown in Fig. 4.

The positioning lever 36 serves to hold the segment 21 in a position after speed change, supports a roller 74, which rolls on an outer peripheral surface (comprising a convex surface and a concave surface) of a lower portion of the segment rotatably, and is supported rotatably on the shift shaft 32. The positioning lever 36 is provided with an arm 75, which extends downward from a side of the shift shaft 32, and connects thereto the tension coil spring 37 through the arm 75.

As shown in Fig. 1, the other end of the tension coil spring 37 is mounted to the right crank-case half 5 so that the positioning lever 36 is biased clockwise in Fig. 3. The tension coil spring 37 constitutes a spring member referred to in the invention.

As shown in Figs. 3 and 4, the positioning lever 36 according to the embodiment and a half of the tension coil spring 37 positioned on a side of the lever 36 are positioned in a manner to overlap the shift lever body 34 as viewed in an axial direction of the shift shaft 32.

With the gearshift device 1 constructed in this manner, an occupant steps on the shift pedal 33 whereby the shift shaft 32 rotates against the elastic force of the first torsion spring 59 in one or the other direction. The shift shaft 32 rotates by the release angle whereby the clutch 25 is disconnected upon the motion of the clutch release mechanism 31.

At this time, the shift lever body 34 and the engaging member 35 rotate together with the shift shaft 32 but the pawl 73 does not engage with the pin 22a or the pin 22b of the segment 21 until the rotating angle of the shift shaft 32 reaches the release angle. That is, the shift lever body 34 and the engaging member 35 float in a state of not operating the transmission 3.

When the rotating angle of the shift shaft 32 further increases and exceeds the release angle, the pawl 73 of the engaging member 35 engages with the pin 22a or the pin 22b to push and rotate the segment 21 in a direction of speed change. When the engaging member 35 rotates the segment 21, the engaging member 35 is turned relative to the shift lever body 34 about the spindle 61 against the elastic force of the second torsion spring 64.

The shift shaft 32 rotates until the opened edge 51a, 51b of the shift lever body 34 abuts against the pin 57 for restriction of turning whereby the engaging member 35 rotates the segment 21 further in the direction of speed change to complete the speed change with the transmission 3. At this time, the third convex piece 55 or the fourth convex piece 56 of the shift lever body 34 is inserted between adjacent pins 22 of the segment 21. Therefore, even when the segment 21 rotates further from the speed change position due to inertia, the pin 22 comes into contact with the third and fourth convex pieces 55, 56 whereby further rotation of the segment 21 is inhibited.

After the completion of speed change, when a foot having stepped on the shift pedal 33 returns, an assembly composed of the shift shaft 32, the shift pedal 33, and the shift lever body 34 is returned to the neutral position before the speed change operation by an elastic force of the first torsion spring 59. In this manner, the shift lever body 34 returns to the neutral position whereby the clutch 25 connects and the engaging member 35 returns to the initial position shown in Fig. 3.

Accordingly, the embodiment enables the shift lever body 34 and the engaging member 35 to transmit rotation of the shift shaft 32 to the segment 21 of the transmission 3, so that it is possible to decrease lever members in number as compared with conventional gearshift devices. Consequently, it is possible to provide a gearshift device capable of achieving miniaturization and reduction in number of parts to enable reduction in cost while adopting a construction, in which speed change is made after the clutch 25 is disconnected by the speed change operation.

Since the gearshift device 1 according to the embodiment adopts a construction, in which the shift pedal 33 operated artificially rotates the shift shaft 32, an occupant's foot operates to enable switchover in connection·disconnection of the clutch 25 and speed change with the transmission 3. Therefore, speed change can be made with the same sensing of operation as that in conventional gearshift devices for motorcycles.

With the gearshift device 1 according to the embodiment, the shift lever body 34 is formed to extend on an opposite side of the center C of rotation of the segment 21 to the shift shaft 32 and the engaging member 35 is provided in a position, in which it engages with the pin 22 of the segment 21 from an opposite side to the shift shaft 32, it is possible to provide the segment 21 (shift drum 7) in a position close to the shift shaft 32. Therefore, it is possible to provide a further compact gearshift device.

With the gearshift device 1 according to the embodiment, the third and fourth convex pieces 55, 56 of the shift lever body 34 can prevent the segment 21 from rotating excessively due to inertia after speed change. Therefore, with the gearshift device 1, it is possible to exactly perform speed change at all times.

With the gearshift device 1 according to the embodiment, the positioning lever 36 and a part of the tension coil spring 37 are positioned in a manner to overlap the shift lever body 34 as viewed in an axial direction of the shift shaft 32, so that it is possible to mount the positioning lever 36 so as to inhibit the same from projecting much outside the shift lever body 34 as viewed in the axial direction of the shift shaft 32. Therefore, with the gearshift device 1 according to the embodiment, the positioning lever 36 can prevent the segment 21 from rotating unnecessarily while achieving making the whole device small in size.

While the embodiment described above has illustrated an example, in which the shift pedal 33 artificially rotates the shift shaft 32, the shift shaft 32 can be rotated by an actuator, which includes, for example, a motor as a power source. In case of adopting such construction, an actuator 81 is mounted to the crank case 2 and an output member (not shown) of the actuator 81 is connected to a shaft end of the shift shaft 32 as shown in Fig. 1.

By mounting the actuator 81 in this manner, it is possible to provide a gearshift device enabling switchover in connection·disconnection of the clutch 25 and speed change with the transmission 3 in a remote control operation.

### Description of Reference Numerals and Signs

1: gearshift device, 3: transmission, 6: main shaft, 7: shift drum, 21: segment, 22: pin, 25: clutch, 25e: push rod, 31: clutch release mechanism, 32: shift shaft, 34: shift lever body, 35: engaging member, 36: positioning lever, 37: tension coil spring, 41: cam mechanism, 55: third convex piece, 56: fourth convex piece, 73: pawl, 74: roller

## Claims

1. A gearshift device (1) comprising:
a shift shaft (32) adapted to be rotated by an operation member (33);
a clutch release mechanism (31) adapted to disconnect a clutch upon rotation of the shift shaft (32) by a predetermined release angle;
a transmission input member (21); and
a shift lever disposed between the shift shaft (32) and the input member (21), the shift lever comprising a shift lever body (34) fixed to the shift shaft (32) so as to rotate integrally with the shift shaft (32);
the shift lever being formed to extend on an opposite side of a center of rotation of the input member (21) to the shift shaft (32), and an engaging member (35) is provided in a position, in which it is engagable with the input member (21) from an opposite side to the shift shaft (32); **characterized in that**
the shift lever comprises the engaging member, a swinging end of the shift lever body (34) being mounted rotatably to a spindle (61), by which the engaging member (35) is supported;
the engaging member (35) comprising a base portion (72) and a pawl (73) formed by bending a sheet metal so as to extend in parallel with the base portion (72); wherein
the engaging member (35) is adapted to move upon rotation of the shift shaft (32) between an initial position spaced a distance (D) from the input member (21), wherein the distance (D) corresponds to the release angle (21) through which the shift shaft (32) rotates in order to release the clutch, and a speed change position in which the pawl (73) of the engaging member (35) engages the input member (21) to displace said input member (21) to effect a transmission gear shift.

2. The gearshift device (1) according to claim 1, wherein the engaging member (35) is adapted to engage with the input member (21) to rotate said input member (21) to effect a transmission gear shift.

3. The gearshift device (1) according to claim 1 or 2, wherein the shift lever is configured to float upon rotation of the shift shaft (32) by a distance corresponding to the release angle.

4. The gearshift device (1) according to any preceding claim, wherein a plurality of pins (22) are provided upright on the input member (21) to be disposed in positions corresponding to gear shift positions and made parallel to an axial direction of the input member (21), and the engaging member (35) includes a pawl (73) adapted to engage with at least one pin (22) in a direction perpendicular to the axial direction.

5. The gearshift device (1) according to claim 4, wherein the shift lever body (34) is provided with a stopper (55, 56) adapted to abut against the pin (22) to restrict rotation of the input member (21) in a state, in which the engaging member (35) is rotated so as to be positioned in a gear shift position.

6. The gearshift device (1) according to any preceding claim, wherein concave and convex surfaces (21a, 21b) are formed on an outer periphery of the input member (21) to correspond to gear shift positions, the gearshift device (1) further comprising:
a roller (74) in contact with the outer periphery of the input member (21);
a positioning lever (36) rotatably supported on the shift shaft (32) and adapted to rotatably support the roller (74) ; and
a spring member (37), which biases the positioning lever (36) so that the roller (74) is pushed against the input member (21).

7. The gearshift device (1) according to claim 6, wherein the positioning lever (36) and a part of the spring member (37) are positioned in a manner to overlap the shift lever body (34) as viewed in an axial direction of the shift shaft (32).

8. The gearshift device (1) according to any preceding claim, wherein the operation member (33) comprises a manually operated member.

9. The gearshift device (1) according to any preceding claim, wherein the operation member (33) comprises an actuator having a power source.

10. The gearshift device (1) according to any preceding claim, wherein the shift shaft (32) is adapted to be rotated in opposite directions.

11. A gearshift device (1) according to any of the preceding claims, wherein
the shift lever is arranged to float by a distance corresponding to the release angle and caused by rotation of the shift shaft (32) over the release angle to engage with the input member (21) to rotate the input member (21), and
the engaging member (35) is provided rotatably at an end of the shift lever body (34) close to the input member (21).

12. A vehicle comprising a gearshift device (1) according to any preceding claim.

## Patentansprüche

1. Gangschaltvorrichtung (1), die Folgendes umfasst:
eine Schaltwelle (32), die so gestaltet ist, dass sie von einem Betätigungselement (33) gedreht werden kann;
einen Kupplungsausrückmechanismus (31) zum Trennen einer Kupplung bei Rotation der Schaltwelle (32) um einen vorbestimmten Ausrückwinkel;
ein Getriebeeingangselement (21); und
einen Schalthebel, der zwischen der Schaltwelle (32) und dem Eingangselement (21) angeordnet ist, wobei der Schalthebel einen Schalthebelkörper (34) umfasst, der so an der Schaltwelle (32) befestigt ist, dass er mit der Schaltwelle (32) integriert rotiert;
wobei der Schalthebel so ausgebildet ist, dass er auf einer zur Schaltwelle (32) gegenüberliegenden Seite eines Drehpunkts des Eingangselements (21) verläuft, und ein Eingriffselement (35) in einer Position vorgesehen ist, in der es mit dem Eingangselement (21) von einer gegenüberliegenden Seite zur Schaltwelle (32) in Eingriff gebracht werden kann; **dadurch gekennzeichnet, dass**
der Schalthebel das Eingriffselement umfasst, wobei ein schwingendes Ende des Schalthebelkörpers (34) drehbar an einer Spindel (61) montiert ist, die das Eingriffselement (35) trägt;
wobei das Eingriffselement (35) einen Basisteil (72) und eine Klaue (73) umfasst, die durch Biegen eines Metallblechs ausgebildet ist, so dass sie parallel zum Basisteil (72) verläuft; wobei
das Eingriffselement (35) so gestaltet ist, dass es sich bei Rotation der Schaltwelle (32) zwischen einer Anfangsposition, die eine Distanz (D) vom Eingangselement (21) hat, wobei die Distanz (D) dem Ausrückwinkel (21) entspricht, um den die Schaltwelle (32) zum Ausrücken der Kupplung rotiert, und einer Drehzahländerungsposition bewegt, in der die Klaue (73) des Eingriffselements (35) in das Eingangselement (21) eingreift, um das Eingangselement (21) zum Bewirken einer Getriebegangschaltung zu verschieben.

2. Gangschaltvorrichtung (1) nach Anspruch 1, wobei das Eingriffselement (35) so gestaltet ist, dass es in das Eingangselement (21) eingreift, um das Eingangselement (21) zum Bewirken einer Getriebegangschaltung zu drehen.

3. Gangschaltvorrichtung (1) nach Anspruch 1 oder 2, wobei der Schalthebel so konfiguriert ist, dass er nach einer Rotation der Schaltwelle (32) um eine Distanz schwebt, die dem Ausrückwinkel entspricht.

4. Gangschaltvorrichtung (1) nach einem der vorherigen Ansprüche, wobei mehrere Bolzen (22) aufrecht an dem Eingangselement (21) zum Anordnen in Positionen vorgesehen sind, die Gangschaltpositionen entsprechen, und parallel zu einer axialen Richtung des Eingangselements (21) verlaufen, und das Eingriffselement (35) eine Klaue (73) aufweist, die so gestaltet ist, dass sie mit wenigstens einem Bolzen (22) in einer Richtung lotrecht zur axialen Richtung eingreift.

5. Gangschaltvorrichtung (1) nach Anspruch 4, wobei der Schalthebelkörper (34) mit einem Anschlag (55, 56) versehen ist, der so gestaltet ist, dass er an den Bolzen (22) anstößt, um eine Rotation des Eingangselements (21) in einem Zustand zu beschränken, in dem das Eingriffselement (35) in eine Gangschaltposition gedreht wird.

6. Gangschaltvorrichtung (1) nach einem der vorherigen Ansprüche, wobei konkave und konvexe Flächen (21a, 21b) so auf einer äußeren Peripherie des Eingangselements (21) ausgebildet sind, dass sie Gangschaltpositionen entsprechen, wobei die Gangschaltvorrichtung (1) ferner Folgendes umfasst:
eine Rolle (74) in Kontakt mit der äußeren Peripherie des Eingangselements (21);
einen Positionierungshebel (36), der drehbar auf der Schaltwelle (32) gelagert und so gestaltet ist, dass er die Rolle (74) drehbar lagert; und
ein Federelement (37), das den Positionierungshebel (36) so vorspannt, dass die Rolle (74) gegen das Eingangselement (21) gedrückt wird.

7. Gangschaltvorrichtung (1) nach Anspruch 6, wobei der Positionierungshebel (36) und ein Teil des Federelements (37) auf eine solche Weise positioniert sind, dass sie mit dem Schalthebelkörper (34) mit Blick in einer axialen Richtung der Schaltwelle (32) überlappen.

8. Gangschaltvorrichtung (1) nach einem der vorherigen Ansprüche, wobei das Betätigungselement (33) ein manuell betätigtes Element umfasst.

9. Gangschaltvorrichtung (1) nach einem der vorherigen Ansprüche, wobei das Betätigungselement (33) einen Aktuator mit einer Kraftquelle umfasst.

10. Gangschaltvorrichtung (1) nach einem der vorherigen Ansprüche, wobei die Schaltwelle (32) so gestaltet ist, dass sie in entgegengesetzten Richtungen gedreht werden kann.

11. Gangschaltvorrichtung (1) nach einem der vorherigen Ansprüche, wobei
der Schalthebel so angeordnet ist, dass er um eine Distanz schwebt, die dem Ausrückwinkel entspricht und die durch eine Rotation der Schaltwelle (32) um den Ausrückwinkel bewirkt wird, um zum Drehen des Eingangselements (21) in dieses einzugreifen, und
das Eingriffselement (35) drehbar an einem Ende des Schalthebelkörpers (34) nahe am Eingangselement (21) vorgesehen ist.

12. Fahrzeug, das eine Gangschaltvorrichtung (1) nach einem der vorherigen Ansprüche umfasst.

## Revendications

1. Boîte de vitesses (1), comprenant :
un arbre de changement de vitesse (32), adapté pour être tourné par un élément opérationnel (33) ;
un mécanisme de débrayage (31), adapté pour déconnecter un embrayage lors de la rotation de l'arbre de changement de vitesse (32) à un angle de dégagement prédéterminé ;
un élément d'entrée de transmission (21) ; et
un levier de changement de vitesse, agencé entre l'arbre de changement de vitesse (32) et l'élément d'entrée (21), le levier de changement de vitesse comprenant un corps du levier de changement de vitesse (34) fixé sur l'arbre de changement de vitesse (32), de sorte à tourner d'une seule pièce avec l'arbre de changement de vitesse (32) ;
le levier de changement de vitesse étant formé de sorte à s'étendre sur un côté d'un centre de rotation de l'élément d'entrée (21) opposé à l'arbre de changement de vitesse (32), un élément d'engagement (35) étant agencé dans une position dans laquelle il peut s'engager dans l'élément d'entrée (21) à partir d'un côté opposé à l'arbre de changement de vitesse (32) ; **caractérisée en ce que**
le levier de changement de vitesse comprend l'élément d'engagement, une extrémité pivotante du corps du levier de changement de vitesse (34) étant montée de manière rotative sur une tige (61) supportant l'élément d'engagement (35) ;
l'élément d'engagement (35) comprenant une partie de base (72) et un cliquet (73), formé en fléchissant une tôle, de sorte à s'étendre de manière parallèle à la partie de base (72) ; dans laquelle
l'élément d'engagement (35) est adapté pour se déplacer lors de la rotation de l'arbre de changement de vitesse (32) entre une position initiale, espacée d'une certaine distance (D) de l'élément d'entrée (21), la distance (D) correspondant à l'angle de dégagement (21) à travers lequel l'arbre de changement de vitesse (32) tourne en vue du débrayage, et une position de changement de vitesse, dans laquelle le cliquet (73) de l'élément d'engagement (35) s'engage dans l'élément d'entrée (21), pour déplacer ledit élément d'entrée (21) afin d'assurer un changement de vitesse de transmission.

2. Boîte de vitesses (1) selon la revendication 1, dans laquelle l'élément d'engagement (35) est adapté pour s'engager dans l'élément d'entrée (21), pour faire tourner ledit élément d'entrée (21) afin d'assurer un changement de vitesse de transmission.

3. Boîte de vitesses (1) selon les revendications 1 ou 2, dans laquelle le levier de changement de vitesse est configuré de sorte à flotter lors de la rotation de l'arbre de changement de vitesse (32) sur une distance correspondant à l'angle de dégagement.

4. Boîte de vitesses (1) selon l'une quelconque des revendications précédentes, dans laquelle plusieurs broches (22) sont agencées de manière verticale sur l'élément d'entrée (21), en vue d'un agencement dans des positions correspondant aux positions de changement de vitesse et parallèles à une direction axiale de l'élément d'entrée (21), l'élément d'engagement (35) englobant un cliquet (73), adapté pour s'engager dans au moins une broche (22) dans une direction perpendiculaire à la direction axiale.

5. Boîte de vitesses (1) selon la revendication 4, dans laquelle le corps du levier de changement de vitesse (34) comporte un butoir (55, 56), adapté pour buter contre la broche (22) pour limiter la rotation de l'élément d'entrée (21) dans un état dans lequel l'élément d'engagement (35) est tourné de sorte à être positionné dans une position de changement de vitesse.

6. Boîte de vitesses (1) selon l'une quelconque des revendications précédentes, dans laquelle des surfaces concave et convexe (21a, 21b) sont formées sur une périphérie externe de l'élément d'entrée (21), pour correspondre aux positions de changement de vitesse, la boîte de vitesses (1) comprenant en outre :
un rouleau (74), en contact avec la périphérie externe de l'élément d'entrée (21) ;
un levier de positionnement (36), supporté de manière rotative sur l'arbre de changement de vitesse (32) et adapté pour supporter de manière rotative le rouleau (74) ; et
un élément de ressort (37), sollicitant le levier de positionnement (36) de sorte que le rouleau (74) est poussé contre l'élément d'entrée (21).

7. Boîte de vitesses (1) selon la revendication 6, dans laquelle le levier de positionnement (36) et une partie de l'élément de ressort (37) sont positionnés de sorte à chevaucher le corps du levier de changement de vitesse (34), vus dans une direction axiale de l'arbre de changement de vitesse (32).

8. Boîte de vitesses (1) selon l'une quelconque des revendications précédentes, dans laquelle l'élément opérationnel (33) comprend un élément à actionnement manuel.

9. Boîte de vitesses (1) selon l'une quelconque des revendications précédentes, dans laquelle l'élément opérationnel (33) comprend un actionneur comportant une source d'énergie.

10. Boîte de vitesses (1) selon l'une quelconque des revendications précédentes, dans laquelle l'arbre de changement de vitesse (32) est adapté pour être tourné dans des directions opposées.

11. Boîte de vitesses (1) selon l'une quelconque des revendications précédentes, dans laquelle
le levier de changement de vitesse est agencé de sorte à flotter sur une certaine distance, correspondant à l'angle de dégagement, par suite de la rotation de l'arbre de changement de vitesse (32) sur l'angle de dégagement, en vue d'un engagement dans l'élément d'entrée (21), pour faire tourner l'élément d'entrée (21) ; et
l'élément d'engagement (35) est agencé de manière rotative au niveau d'une extrémité du corps du levier de changement de vitesse (34) proche de l'élément d'entrée (21).

12. Véhicule, comprenant une boîte de vitesses (1) selon l'une quelconque des revendications précédentes.
